## Europäisches Patentamt

## European Patent Office

## Office européen des brevets

(11) Veröffentlichungsnummer: **0 093 847**
**B1**

(12) **EUROPÄISCHE PATENTSCHRIFT**

(45) Veröffentlichungstag der Patentschrift:
**01.07.87**

(51) Int. Cl.⁴: **B 26 D 7/06,** A 23 G 3/02

(21) Anmeldenummer: **83102112.6**

(22) Anmeldetag: **04.03.83**

(54) **Vorrichtung zum Abschneiden von Stücken, insbesondere von Bonbons, von einem insbesondere weichplastischen Massestrang.**

(30) Priorität: **05.05.82 DE 3216770**

(43) Veröffentlichungstag der Anmeldung:
**16.11.83 Patentblatt 83/46**

(45) Bekanntmachung des Hinweises auf die Patenterteilung:
**01.07.87 Patentblatt 87/27**

(84) Benannte Vertragsstaaten:
**AT BE CH DE FR GB IT LI LU NL SE**

(56) Entgegenhaltungen:
**CH-A-419 818**
**DE-B-1 176 983**
**DE-C-1 135 741**
**FR-A-2 302 945**
**GB-A-2 033 327**
**US-A-2 122 523**

(73) Patentinhaber: **ROSE VERPACKUNGSMASCHINENFABRIK THEEGARTEN GMBH & CO KG, Widdersdorfer Str. 185, D-5000 Köln 30 (DE)**

(72) Erfinder: **Schmitz, Heinz, Kasparstrasse 42, D-5030 Hürth- Efferen (DE)**

(74) Vertreter: **Hennicke, Albrecht, Dipl.- Ing., Patentanwälte Dipl.- Ing. Buschhoff Dipl.- Ing. Hennicke Dipl.- Ing. Vollbach Kaiser- Wilhelm- Ring 24 Postfach 190 408, D-5000 Köln 1 (DE)**

LIBER, STOCKHOLM 1987

## Beschreibung

Vorrichtung zum Abschneiden von Stücken, insbesondere von Bonbons, von einem insbesondere weichplastischen Massestrang, der durch einen Führungskanal einem Abschneidemesser zugeführt wird, dessen Messerblatt an dem eine Gegenschneidkante bildenden freien Rand des Führungskanales vorbeigleitet und vom Massestrang Stücke abschneidet, die von einem Förderer auf einer im wesentlichen horizontalen Förderfläche einer Verpackungsstation, Weiterverarbeitungsstelle od.dgl. zugeschoben werden.

Es ist eine Vorrichtung dieser Art zum Herstellen von Bonbons bekannt (DE-B-1 176 983), bei der ein rotierendes Abschneidemesser von einem von oben her zugeführten Massestrang Stücke abschneidet, die in die Taschen eines Zuteilungstellers fallen, der sich über einer Förderfläche dreht, die mit Ausnehmungen für Werkzeuge zur Weiterverarbeitung der Bonbons versehen sind.

Die bekannte Vorrichtung ist nur zum Abschneiden und Weiterfördern von Stücken verwendbar, die wie verhältnismäßig harte Bonbons eine genügend feste Konsistenz haben und beim Niederfallen in die Taschen des Zellenrades nicht verformt werden und die auch nicht so klebrig sind, daß sie am Messer haftenbleiben oder die Taschen des Zuteilungstellers verschmieren.

Für den Transport zum Weiterverarbeiten und Verpacken von druckempfindlichen Stücken, wie Weichkaramellen, Butter- oder Käseportionen, werden deshalb bevorzugt Stetigförderer eingesetzt, die in Förderrichtung im Abstand voneinander angeordnete Mitnehmer haben, welche hinter die abgeschnittenen Stücke fassen und diese auf einer Förderfläche weiterschieben (DE-A-1 611 895). Hierbei kann es jedoch geschehen, daß die abgeschnittenen Stücke verformt werden, wenn sie von einem Mitnehmer des Stetigförderers plötzlich erfaßt und vom Stillstand auf eine verhältnismäßig hohe Geschwindigkeit beschleunigt werden. Bei abgeschnittenen Stücken von etwas härterer, elastischer Konsistenz, wie sie beispielsweise bei bestimmten Bonbons vorliegt, kann es auch geschehen, daß das jeweils abgeschnittene Bonbon unter dem Schlag des hinter ihn greifenden Mitnehmers in Förderrichtung springt, wodurch der normale Förderablauf gestört wird.

Um einen gleichmäßigen Förderstrom solcher, von einem Massestrang abgeschnittener Stücke zu erreichen, war es deshalb bisher notwenig, Zwischenfördereinrichtungen, wie Zellenräder, intermittierend arbeitende Schubvorrichtungen o.dgl. vorzusehen, um die von Massestrang abgeschnittenen Stücke im gleichmäßigen Abstand und möglichst mit der gleichen Geschwindigkeit auf den Stetigförderer zu bringen, damit dieser die Stücke der Weiterverarbeitungs- oder Verpackungsstation in gleichbleibenden Abständen und mit gleichbleibender Geschwindigkeit zuführen kann. Diese zusätzlichen Übergabevorrichtungen benötigen zusätzliche Antriebe, die auf die Fördergeschwindigkeit des Stetigförderers und der Abschneidevorrichtung abgestimmt sind. Sie verteuern die Gesamtanlage und müssen regelmäßig gewartet und gereinigt werden.

Aufgabe der Erfindung ist es, die Übergabe der abgeschnittenen Stücke von der Abschneidevorrichtung zum Förderer zu vereinfachen und die Vorrichtung so auszubilden, daß eine Beschädigung oder Verformung auch von Stücken aus weichplastischem Material beim Übergang auf den Förderer nicht eintritt.

Diese Aufgabe wird mit der Erfindung dadurch gelöst, daß der Förderer ein Stitigförderer mit in Förderrichtung im Abstand voneinander angeordneten Mitnehmern ist, die hinter die abgeschnittene Stücke fassen, und daß das in Förderrichtung des Stetigförderers etwa mit gleicher Geschwindigkeit wie dieser bewegbare Messerblatt etwa in der Ebene der Förderfläche angeordnet ist und ihm der Massestrang von unter her zugeschoben wird, wobei sich das vom Massestrang abgeschnittene Stück bereits beim Abschneiden zwischen den Mitnehmern des Stetigförderers befindet.

Deises Ausgestaltung hat den Vorteil, daß das abgeschnittene Stück von dem sich in Förderrichtung bewegenden Messerblatt mitgenommen wird, dessen Geschwindigkeit zweckmäßig auf die Fördergeschwindigkeit des Stetigfördererers abgestimmt wird. Das vom Massestrang abgeschnittene Stück hat dann mindestens annähernd die gleiche Geschwindigkeit wie der Stetigförderer, wenn einer seiner Mitnehmer hinter das abgeschnittene Stück greift. Der Mitnehmer übt dann auf das weiterzufördernde Stück, beispielsweise ein Bonbon oder eine abgeschnittene Butterportion keinen Schlag mehr aus, so daß das abgeschnittene Stück nicht verformt wird und auch nicht auf dem Fördertisch entlang-springt.

Um zu vermeiden, daß spezifisch leichte, abgeschnittene Stücke nicht sofort mitgenommen werden, sondern auf dem sich weiterdrehenden Messerblatt entlanggleiten, ist es zweckmäßig, wenn das Messerblatt auf seiner dem abgeschnittenen Stück zugewandten Fläche einen die Haftung zwischen dem Messerblatt und dem abgeschnittenen Stück vergrößernden Flächenteil aufweist. Hierbei kann dieser haftungsvergrößernder Flächenteil eine rauhe Oberfläche, insbesondere eine Riffelung aufweisen, er kann aber auch mit Saugmitteln versehen sein. Zu diesem Zwecke kann im Messerblatt mindestens eine durchgehende Öffnung angeordnet sein, die über einer unter dem Messerblatt angeordneten Unterdruckkammer hinwegläuft, so daß auf das vom Messerblatt abgeschnittene Stück eine Saugwirkung ausgeübt wird, welche das Stück auf dem Messerblatt festhält, wenn sich dieses weiterdreht.

Das Messerblatt ist zweckmäßig um eine seitlich neben der Förderfläche und quer zu dieser angeordnete Achse drehbar, und die Förderfläche weist an ihrer der Messerachse zugewandten Seite einen Anschlag für die abgeschnittenen Stücke auf, unter dem das sich drehende Messerblatt vorbeigleitet. Das von dem sich drehenden Messer zunächst auf einer Kreisbahn mitgenommene Stück gleitet dann am Anschlag entlang und nimmt hierdurch eine Linearbewegung in der gleichen Richtung an, in der sich die Mitnehmer des Stetigförderers bewegen.

Das Messerblatt ist zweckmäßig kreissektorförmig ausgebildet und mit der Sektorspitze an der Messerachse gelagert. Hierdurch bleibt bei einer Umdrehung des Messerblattes genügend Zeit zum Vorschieben des Massestranges, und das vom Messer abgeschnittene Stück findet auf dem sektorförmigen Messerblatt genügend Platz, um in Förderrichtung beschleunigt und weitergetragen zu werden.

Das Messerblatt kann kann auch zwei diametral einander gegenüberliegende Messerflügel haben, die mit je einer Schneider versehen sind. Bei einer Umdrehung der Messerwelle werden dann zwei Schnitte nacheinander ausgeführt. Hierdurch kann die Leistung gesteigert werden.

Anstelle eines sich drehenden Messerblattes kann zum Abschneiden der Stücke vom Massestrang auch mindestens ein in der Ebene der Förderfläche in Förderrichtung hin- und herbewegbares Messerblatt vorgesehen sein, und es ist auch möglich, ein Geggenmesser vorzusehen, das mit dem Messerblatt beim Abschneiden der Stücke nach Art einer Schere zusammenwirkt.

Bei bestimmten Ausgangsmaterialien kann es zweckmäßig sein, wenn der Massestrang dem Abschneidemesser durch einen Führungskanal zugeführt wird, dessen freier Rand in der Ebene der Förderfläche liegt und eine Gegenschneidkante für das Messerblatt bildet.

Weitere Vorteile der Erfindung ergeben sich aus der nachfolgenden Beschreibung von besonders zweckmäßigen Ausführungsformen der Erfindung, die durch die Zeichnungen und Ausführungsbeispiele näher erläutert werden. Es zeigt:

Fig. 1 eine Vorrichtung zum Abschneiden und Weiterfördern von Bonbons nach der Erfindung in einer schematischen Seitenansicht,

Fig. 2 den Gegenstand der Fig. 1 in einem Horizontalschnitt nach Linie II-II.

Fig. 3 eine andere Ausführungsform des bei der Abschneidevorrichtung verwendeten Messerblattes im Grundriß.

In den Zeichnungen ist mit 10 eine Vorrichtung zum Abschneiden von Bonbons von einem Massestrang und zum Weiterfördern der abgeschnittenen Stücke zu einer Einwickelvorrichtung bezeichnet. Die Vorrichtung 10 besteht aus einer Vorschubeinrichtung 11, die zwei gegensinnig vorlaufende, im Abstand voreinander angeordnete Vorschubrollen 12 ausweist, die einen Massestrang 13, im vorliegenden Falle eine weichplastische Bonbonmasse, durch einen zylindrischen Führungskanal 14 nach oben schieben, der sich unmittelbar oberhalb der Vorschubrollen 12 befindet und in der Ebene 15 einer Förderfläche 16 endet, die von einem horizontal angeordneten Fördertisch gebildet wird.

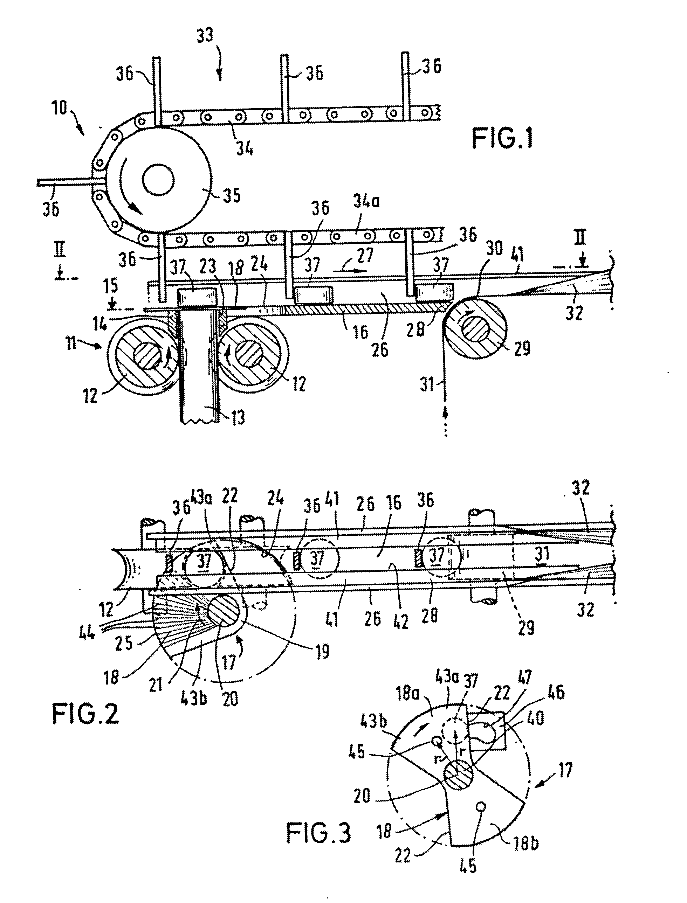

Oberhalb der Vorschubrollen 12 der Vorschubeinrichtung 11 befindet sich ein Abschneidemesser 17 mit einem kreissektorförmigen Messerblatt 18, das mit seiner Sektorspitze 19 auf einer Messerachse 20 befestigt ist, die seitlich neben der Förderfläche 16 und senkrecht zu dieser Förderfläche in einer hier nicht näher dargestellten Lagerung drehbar gelagert ist. Das Messerblatt 18 des Abschneidemessers 17 dreht sich in Fig. 2 im Uhrzeigersinne in Richtung des Pfeiles 21 und gleitet hierbei mit seiner Schneide 22 voran am oberen Rand 23 des Führungskanales 14 vorbei, der eine Gegenschneidkante für das Messerblatt 18 bildet.

Im Bereich des Messerblattes 18, das in der Ebene 15 der Förderfläche 16 liegt, hat der Fördertisch 16 einen kreisbogenförmigen Ausschnitt 24, an dessen Rand die Umfangskante 25 des Messerblattes 18 im geringen Abstand vorbeigleitet.

Oberhalb der Förderfläche 16 sind auf beiden Seiten Anschlagleisten 26 vorgesehen, die sich in Längsrichtung der Förderfläche erstrecken und mit Abdeckplatten 41 verbunden sind, die einen Längsschlitz 42 zwischen sich freilassen und zusammen mit den Anschlagleisten 26 und der Förderfläche 16 einen im wesentlichen geschlossenen Förderkanal bilden.

Am dem in Förderrichtung 27 hinteren Ende 28 der Förderfläche 16 befindet sich eine Umlenk- und Vorschubwalze 29, deren Mantelfläche 30 in der Ebene 15 der Förderfläche 16 liegt und über die eine Einwickelpapierbahn 31 läuft, die sich in der Ebene 15 der Förderfläche 16 in Förderrichtung 27 bewegt und deren Ränder von seitlich angeordneten Leitblechen 32 aufgerichtet und umgeschlagen werden, so daß der über die Umlenkwalze 29 zugeführte Papierstreifen 31 zu einem Schlauch geformt wird, wie dies in der Verpackungstechnik an sich bekannt ist.

Oberhalb der Förderfläche 16 ist ein Stetigförderer 33 angeordnet, der von einer endlosen Förderkette 34 gebildet wird, die um Antriebs- und Umlenkrollen 35 umläuft, von denen in der Zeichnung nur eine dargestellt ist. An der Förderkette 34 sind in regelmäßigen Abständen Mitnehmer 36 befestigt, die sich nach außen erstrecken und im Bereich des Untertrums 34a der Förderkette 34 in den Längsschlitz 42 des Förderkanales für die vom Massestrang abgeschnittenen Stücke 37 hineinreichen und unmittelbar oberhalb der Förderfläche 16 enden.

Man erkennt aus Fig. 2, daß das Messerblatt 18 einen an die Schneide 22 anschließenden ersten Flächenteil 43a und einen sich hieran in Umfangsrichtung anschließenden zweiten Flächenteil 43b aufweist. Der erste Flächenteil 43a hat eine glatte Oberfläche und seine Breite ist in Unfangsrichtung im Bereich der abzuschneidenden Stücke 37 ebenso groß wie der Durchmesser des Massestranges 13, von dem die Stücke 37 abgeschnitten werden. Der sich anschließende Flächenteil 43b des Messerblattes 18 hat eine radial verlaufende Riffelung 44, durch die eine rauhe Oberfläche entsteht und die Reibung zwischen diesen Flächenteilen 43b und der Unterseite des abgeschnittenen Stückes 37 vergrößert wird.

Selbstverständlich können zur Vergrößerung der Haftreibung auch andere Mittel verwendet werden. Beispielweise kann die Oberfläche des Flächenteils 43b kleine Häkchen oder Zacken, Noppen oder aufgeklebte Rundkörner aufweisen, wenn dies mit dem zu fördernden Produkt verträglich ist.

Die Wirkungsweise der Vorrichtung ist folgende:

Von dem von den Vorschubrollen 12 über die Ebene 15 der Förderfläche 16 vorgeschobenen Massestrang 13 wird von dem sich in Richtung des Pfeiles 21 drehenden Messerblatt 18 jeweils ein Stück 37 abgeschnitten, wenn die Schneide 22 des Messerblattes 18 an der als Gegenschneide wirkenden Kante 23 des Führungsrohres 14 entlangsgleitet. Bei Durchführung des Schnittes gelangt das abgeschnittene Stück 37 auf die Oberfläche des Abschneidemessers 17 und wird von diesem weitergetragen, während sich das Messerblatt 18 weiterdreht, bis das abgeschnittene Stück 37 von der Anschlagleiste 26 aufgehalten wird, während sich das Messerblatt 18 unter der Anschlagleiste weiterbewegt.

Man erkennt aus Fig. 1 und 2, daß das Bonbon 37 vom Massestrang 13 zweischen zwei Mitnehmern 36 des Stetigförderers 33 abgeschnitten wird, die von der Förderkette 34 über dem Messerblatt 18 und der Förderfläche 16 in Förderrichtung 27 bewegt werden. Die Längsgeschwindigkeit der Förderkette 34 ist auf die Drehgeschwindigkeit des Abschneidemessers 17 abgestimmt, so daß sich das auf dem Messerblatt 18 liegende, von diesem abgeschnittene Stück und der in Förderrichtung 27 hinter ihm angeordnete Mitnehmer 36 etwa mit gleicher Geschwindigkeit in Förderrichtung 27 bewegen. Es besteht deshalb keine oder nur eine sehr geringe Geschwindigkeitsdifferenz zwischen dem abgeschnittenen Stück 37 und dem hinter ihm angeordneten Mitnehmer 36, wenn das abgeschnittene Stück 37 an der Anschlagleiste 26 von dem sich weiterdrehenden Messerblatt 18 abgestreift wird und der in Förderrichtung 27 hinter ihm angeordnete Mitnehmer 36 das abgeschnittene Stück 37 erfaßt und auf der Förderfläche 16 in Förderrichtung 27 weiterschiebt.

Die abgeschnittenen und von den Mitnehmern 36 auf der Förderfläche 16 entlanggeschobenen Stücke 37 gelangen dann am Ende 28 der Förderfläche 16 auf die in Förderrichtung 27 laufende Papierbahn 31, welche sie wie ein Gurtförderer mitnimmt und an den Leitblechen 32 über sie geschlagen wird, so daß sie wie in einem Schlauch zur Verpackungs- und Verschließstation weitergeleitet werden. Dort wird die Papierhülle zwischen den einzelnen Stücken 37 in bekannter Weise durchschnitten und an den Enden der eingewickelten Stücke umgeschlagen oder umgedreht, wie dies an sich bekannt ist.

In Fig. 3 ist eine andere Ausführungsform des Abschneidemessers 17 gezeigt, bei der das Messerblatt 18 zwei einander diamentral gegenüberliegende Messerflügel 18a und 18b aufweist und mit der Messerwelle 40 fest verbunden ist, die sich um die Messerachse 20 dreht.

Um auch bei deiser Ausführungsform eine sichere Mitnahme des abgeschnittenen Stückes vom Messerblatt 18 zu gewährleisten, ist in jedem Messerblatt 18a und 18b eine durchgehende Öffnung 45, beispeielsweise eine Bohrung, vorgesehen, die sich in gleichem radialen Abstand r von der Messerachse 20 befindet wie der Massestrang 13 bzw. das von diesem abgeschnittene Stück 37 aund die von der Schneide 22 des jeweiligen Messerflügels 18a bzw. 18b einen Abstand in Umfangsrichtung hat, welcher dem Durchmesser des abzuschneidenden Stückes 37 entspricht. Unter dem Messerblatt 18 befindet sich ein Unterdruckkasten 46, der an einer hier nicht näher dargestellten Unterdruckleitung angeschlossen ist und an seiner Oberseite eine Öffnung 47 aufweist, über welche die Öffnungen 45 hinweggleiten, wenn das Messerblatt 18 sich über den Unterdruckkasten 46 hinwegdreht und seine Unterseite abdichtend an der Oberseite des Unterdurckkastens 46 entlanggleitet. Sobald das in Fig. 3 in strichierten Linien angedeutete Stück 37 vom Massestrang 13 abgeschnitten worden ist und die in Fig. 3 dargestellte Lage einnimmt, gleitet es auf dem sich in Förderrichtung weiterdrehenden Messerblatt 18 ein wenig in Umfangsrichtung, bis es die Öffnung 45 überdeckt. Diese Öffnung 45 ist bei weiterer Drehung zugleich in den Bereich der Öffnung 47 des Unterdruckkastens 46 gelangt, so daß über der Öffnung 45 liegende Stück 37 durch Saugwirkung auf der Oberfläche des Messerblattes 18 festgehalten und von diesem in Umfangsrichtung mitgenommen wird, bis es an der Anschlagleiste 26 anstößt und von einem der Mitnehmer auf der Förderfläche 16 weitergefördert wird.

Anstelle des Abschneidemessers mit drehbarem Messerblatt kann auch ein Messerblatt verwendet werden, das sich in der Ebene 15 der Förderfläche 16 in Förderrichtung 27 hin- und herbewegt und beispielsweise zwischen den Anschlagleisten 26 und dem oberen Rand 23 des Führungsrohres 14 gleitet und geführt ist.

Bei einer weiteren, hier nicht näher dargestellten Ausführungsform können auch zwei Abschneidemesser vorgesehen sein, die sich nach Art einer Schere gegeneinander bewegen und gleichzeitig um einen außerhalb der Förderfläche 16 liegenden Punkt schwenken, so daß das von den Abschneidemessern abgetrennte Stück in Förderrichtung 27 weiterbefördert wird, bevor es von einem Mitnehmer erfaßt und auf der Förderfläche 16 weitergeschoben wird.

Die Erfindung ist nicht auf die dargestellten Ausführungsformen beschränkt, sondern es sind noch mehrere Änderungen und Ergänzungen möglich, ohne den Rahmen der Erdindung zu verlassen. Beispielsweise ist es möglich, das Abschneidemesser unmittelbar oberhalb der Förderfläche und über diese hinweggleitend anzuordnen und zur Führung des vorzuschiebenden Massestranges ein rechteckiges oder quadratisches Führungsrohr vorzusehen. Ferner können die abgeschnittenen Stücke auch einer anderen Weiterverarbeitungsstation zugeführt werden. Obgleich sich die erfindungsgemäße Vorrichtung zum Abschneiden von Bonbons von einem Massestrang besonders eignet, kann sie doch auch zum Abschneiden von Portionen von einem Massestrang eines teigigen Produktes, beispielsweise von Butter, Kuchenteig, Schmalz und Fett verwendet werden.

**Patentansprüche**

1. Vorrichtung zum Abschneiden von Stücken (37), insbesondere von Bonbons, von einem insbesondere weichplastischen Massestrang (13), der durch einen Führungskanal (14) einem Abschneidemesser (17) zugeführt wird, dessen Messerblatt (18) an dem eine Gegenschneidkante bildenden freien Rand (23) des Führungskanales (14) vorbeigleitet und vom Massestrang (13) Stücke (37) abschneidet, die von einem Förderer (33) auf einer im wesentlichen horizontalen Förderfläche (16) einer Verpackungsstation, Weiterverarbeitungsstelle od.dgl. zugeschoben werden, dadurch gekennzeichnet, daß der Förderer (33) ein Stetigförderer mit in Förderrichtung (27) im Abstand voneinander angeordneten Mitnehmern (36) ist, die hinter die abgeschnittenen Stücke (37) fassen, und daß das in Förderrichtung (27) des Stetigförderers (33) etwa mit gleicher Geschwindigkeit wie dieser bewegbare Messerblatt (18) etwa in der Ebene (15) der Förderfläche (16) angeordnet ist und ihm der Massestrang (13) von unter herzugeschoben wird, wobei sich das vom Massestrang abgeschnittene Stück bereits beim Abschneiden zwischen den Mitnehmern des Stetigförderers befindet.

2. Vorrichtung nach Anspruch 1, dadurch gekennzeichnet, daß die Förderfläche (16) einen Anschlag (26) für die abgeschnittenen Stücke (37) aufweist, unter dem das seitlich neben der Förderfläche (16) drehbar gelagerte Messerblatt (18) vorbeigleitet.

3. Vorrichtung nach Anspruch 1 oder 2, dadurch gekennzeichnet, daß das Messerblatt (18) als Kreissektor ausgebildet und mit der Sektorspitze (19) an einer Messerachse (20) gelagert ist.

4. Vorrichtung nach einem der Ansprüche 1 bis 3, dadurch gekennzeichnet, daß das Messerblatt (18) zwei diametral einander gegenüberliegende Messerflügel (18a, 18b) aufweist, die mit je einer Schneide (22) versehen sind.

5. Vorrichtung nach einem der Ansprüche 1 bis 4, gekennzeichnet durch mindestens ein in der Ebene (15) der Förderfläche (16) in Förderrichtung (27) hin- und herbewegbares Messerblatt.

6. Vorrichtung nach einem der Ansprüche 1 bis 5, dadurch gekennzeichnet, daß ein Gegenmesser vorgesehen ist, das mit dem Messerblatt beim Abschneiden der Stücke zusammenwirkt.

7. Vorrichtung nach einem der Ansprüche 1 bis 6, dadurch gekennzeichnet, daß das Messerblatt (18) auf seiner dem abgeschnittenen Stück (37) zugewandten Fläche (43) einen die Haftung zwischen dem Messerblatt (18) und dem abgeschnittenen Stück (37) vergrößernden Flächenteil (43b) aufweist.

8. Vorrichtung nach einem der Ansprüche 1 bis 7, dadurch gekennzeichnet, daß der haftungsvergrößernde Flächenteil (43b) eine rauhe Oberfläche, insbesondere eine Riffelung (44) aufweist.

9. Vorrichtung nach einem der Ansprüche 1 bis 7, dadurch gekennzeichnet, daß der haftungsvergrößernde Flächenteil (43b) Saugmittel (45) aufweist.

10. Vorrichtung nach einem der Ansprüche 1 bis 9, dadurch gekennzeichnet, daß in dem haftungsvergrößernden Flächenteil (43b) des Messerblattes (18) mindestens eine durchgehende Öffnung (45) angeordnet ist, die über eine unter dem Messerblatt (18) angeordnete Unterdruckkammer (46) hinwegläuft.

**Claims**

1. Device for the cutting-off of pieces (37), especially sweets, from a long strand of material (13) which is especially of soft plasticity and which is fed through a guide duct (14) to a severing knife (17) the blade (18) of which knife slides past the free edge (23), forming a counter-cutting edge, of the guide duct (14) and severs from the material strand (13) pieces (37) which are passed on a substantially horizontal conveying surface (16) by a conveyor (33) to a packaging station, further processing station or the like, characterised in that the conveyor (33) is a continuous conveyor with flights (36) which are arranged at a spacing from one another in the conveying direction (27) and which engage behind the severed pieces (37), and that the knife blade (18), which is adapted to move in the conveying direction (27) of the continuous conveyor (33) approximately at the same speed as the latter, is situated substantially in the plane (15) of the conveying surface (16) and the strand of material (13) is fed to it from below, the piece cut off from the strand of material being already situated, when cut off, between the flights of the continuous conveyor.

2. Device according to claim 1, characterised in that the conveying surface (16) has an abutment means (26) for the cut-off pieces (37), and the knife blade (18) which is mounted rotatably adjacent to the conveying surface (16) slides past below the said means.

3. Device according to claim 1 or 2, characterised in that the knife blade (18) is constructed as a sector and is mounted at the sector apex (19) on a knife shaft (20).

4. Device according to one of claims 1 to 3, characterised in that the knife blade (18) has two blade lobes (18a,18b) which are situated diametrally opposite one another and which are each provided with a cutting edge (22).

5. Device according to one of claims 1 to 4, characterised by at least one knife blade movable to and fro in the conveying direction (27) in the plane (15) of the conveying surface (16).

6. Device according to one of claims 1 to 5, characterised in that a counter-knife is provided which co-operates with the knife blade in cutting off the pieces.

7. Device according to one of claims 1 to 6, characterised in that at its surface (43) facing towards the cut-off piece (37) the knife blade (18) has a surface portion (43b) which increases the adhesion effect between the knife blade (18) and the cut-off piece (37).

8. Device according to one of claims 1 to 7, characterised in that the adhesion-increasing surface portion (43b) has a rough surface, especially a fluted surface (44).

9. Device according to one of claims 1 to 7, characterised in that the adhesion-increasing surface portion (43b) comprises suction means (45).

10. Device according to one of claims 1 to 9, characterised in that in the adhesion- increasing surface portion (43b) of the knife blade (18) there is arranged at least one through aperture (45) which travels over a negative-pressure chamber (46) situated below the knife blade (18).

## Revendications

1. Dispositif pour découper des pièces (37), en particulier des bonbons, en particulier d'un boudin de matière (13) molle et plastique, qui est amené par un canal de guidage (14) à un couteau de découpage (17) dont la lame de couteau (18) glisse sur le bord libre (23) du canal de guidage (14) formant un bord de tranchant opposé et qui découpe du boudin de matière (13) des pièces (37) qui sont amenées par un transporteur (33) sur une surface de transport (16) essentiellement horizontale d'un poste d'emballage, d'un poste de parachèvement ou analogue, caractérisé en ce que le transporteur (33) est un engin de manutention continue avec des dispositifs d'entraînement (36) disposés à distance les uns des autres dans la direction de transport (27) et qui saisissent par derrière les pièces découpées (37), et en ce que la lame de couteau (18) est disposée à peu près dans le plan (15) de la surface de transport (16) et peut se déplacer dans la direction de transport (27) de l'engin de manutention continue (33) à une vitesse à peu près égale à celle de celui-ci, tandis que le boudin de matière (13) lui est amené par le dessous et que la pièce découpée du boudin de matière se trouve dejà entre les dispositifs d'entraînement de l'engin de manutention continue au moment du découpage.

2. Dispositif selon la revendication 1, caractérisé en ce que la surface de transport (16) présente une butée (26) pour les pièces découpées (37), sous laquelle la lame de couteau (18) rotative, disposée latéralement à côté de la surface de transport (16) peut se déplacer.

3. Dispositif selon la revendication 1 ou 2, caractérisé en ce que la lame de couteau (18) a la forme d'un secteur de cercle et est supportée par la pointe du secteur (19) sur un axe de couteau (20).

4. Dispositif selon l'une des revendications 1 à 3, caractérisé en ce que la lame de couteau (18) présente deux ailettes de couteau (18a, 18b) diamétralement opposées l'une à l'autre et comportant chacune un tranchant (22).

5. Dispositif selon l'une des revendications 1 à 4, caractérisé en ce qu'il existe au moins une lame de couteau se déplaçant d'un mouvement de va-et-vient dans le plan (15) de la surface de transport (16) dans la direction de transport (27).

6. Dispositif selon l'une des revendications 1 à 5, caractérisé en ce qu'un contre-couteau est prévu pour coopérer avec la lame de couteau pour le découpage des pièces.

7. Dispositif selon l'une des revendications 1 à 6, caractérisé en ce que la lame de couteau (18) présente, sur sa face (43) tournée vers la pièce découpée (37), un élément de surface (43b) augmentant l'adhérence entre la lame de couteau (18) et la pièce découpée (37).

8. Dispositif selon l'une des revendications 1 à 7, caractérisé en ce que l'élément de surface (43b) à adhérence améliorée présente une surface rugueuse et, en particulier, un rainurage (44).

9. Dispositif selon l'une des revendications 1 à 7, caractérisé en ce que l'élément de surface (43b) à adhérence améliorée comporte un dispositif d'aspiration (45).

10. Dispositif selon l'une des revendications 1 à 9, caractérisé en ce qu'au moins un orifice de part en part (45) est disposé dans l'élément de surface (43b) à adhérence améliorée de la lame de couteau (16), cet orifice débouchant sur un caisson à dépression (46), disposé en dessous de la lame de couteau (18).

FIG.1

FIG.2

FIG.3